# EUROPÄISCHE PATENTSCHRIFT

(11) **EP 1 802 454 B1**
(45) Veröffentlichungstag und Bekanntmachung des Hinweises auf die Patenterteilung: **16.05.2012**
(21) Anmeldenummer: 05793841.7
(22) Anmeldetag: 08.10.2005
(51) Int. Cl.: B32B 5/22, B32B 5/28, B32B 13/02, C04B 41/48, E06B 5/16

(54) **VERBUNDSCHICHTPLATTE FÜR BRANDSCHUTZTÜREN**
COMPOSITE LAYERED PLATE FOR FIRE DOORS
PLAQUE A COUCHE COMPOSITE POUR PORTES COUPE-FEU

(30) Priorität: 11.10.2004 DE 102004049632
(43) Veröffentlichungstag der Anmeldung: 04.07.2007
(73) Patentinhaber: BASF SE, 67056 Ludwigshafen (DE)
(72) Erfinder: MAIER, Harry, 67373 Dudenhofen (DE)
(86) Internationale Anmeldenummer: PCT/EP2005/010849
(87) Internationale Veröffentlichungsnummer: WO 2006/040097

(56) Entgegenhaltungen:
- EP-A- 0 743 292
- DE-A1- 1 621 799
- DE-A1- 4 041 447
- FR-A- 2 695 159

## Beschreibung

Die Erfindung betrifft Verfahren zur Herstellung einer Verbundschichtplatte und Verbundschichtplatten, enthaltend mindestens
a) eine Brandschutzschicht A mit einer intumeszierenden Masse auf Basis eines Alkalimetallsilikats und beidseitig aufgebrachten
b) Schutzschichten B und B', welche aus einem Epoxid- oder Polyurethanharz bestehen und als Haftschichten zwischen der Brandschutzschicht A und der Substratschicht C wirken, und
c) einer Substratschicht C aus anorganischen oder organischen Baumaterialien, Papier, Metall, Kunststoff,
und wobei die Verbundschichtplatte die Schichtfolge B'-A-B-C aufweist, erhältlich nach dem Verfahren gemäß Anspruch 3.

Thermische isolierende Brandschutzschichten auf Basis von Alkalimetallsilikaten, die bei Einwirken von hohen Temperaturen zu einer stabilen Schaumschicht aufblähen, sind beispielsweise aus DE-B-1169832 bekannt. Da jedoch Alkalisilikate gegenüber der Einwirkung von Feuchtigkeit und Kohlendioxid empfindlich sind, müssen sie durch eine Schutzschicht vor deren Einwirkung geschützt werden. Die DE-A-1621799 beschreibt Brandschutzplatten aus Alkalimetallsilikaten mit einer Schutzschicht aus Epoxidharz.

Ein Hauptanwendungsgebiet der Brandschutzmaterialien sind Feuerschutztüren aus Holz, bei denen die Flammschutzschicht auf das Holz oder eine Spanfaserplatte genagelt oder aufgeklebt werden muss. Um eine ausreichende Haftung zu erzielen, müssen teuere Spezialkleber eingesetzt werden oder ein körniger Füllstoff an die Oberfläche der Epoxidharzschicht eingelagert werden (EP-B 0743292).

Aufgabe der Erfindung war es daher, Verbundschichtplatten für Brandschutztüren herzustellen, die in Schreinereibetrieben ohne aufwändige Verklebungen mit Spezialklebem eingesetzt werden können. Des weiteren sollte eine einfaches und kostengünstiges Verfahren zur Herstellung der Verbundschichtplatten gefunden werden.

Demgemäß wurden die eingangs beschriebenen Verfahren und Verbundschichtplatte gefunden.

Die Brandschutzschicht A wird bevorzugt aus einer intumeszierenden Masse auf Basis eines Natriumsilikats gebildet. Hierzu verwendet man eine handelsübliche Wasserglaslösung mit einem Wassergehalt von ca. 65 Gew.% und vermischt diese mit Wasserglaspulver mit einem Wassergehalt von ca. 18 Gew.-%. Rührzeiten der Mischung lassen sich über die Menge an Wasserglaspulver gezielt einstellen. Gegebenenfalls können anorganische Füllstoffe wie Metallhydroxide oder Metallsulfathydrate in Mengen von 0 bis 50 Gew.-% sowie bis zu 10 Gew.-% organische Materialien dem Gemisch zugesetzt werden. Zur Verstärkung enthält die Brandschutzschicht A in der Regel Glasfasern in Mengen von 2 bis 20 Gew.-%.

Die Dicke der Brandschutzschicht A liegt in der Regel im Bereich von 1 bis 5 mm, bevorzugt im Bereich von 1,5 bis 3 mm. Ihre Herstellung ist beispielsweise in DE-A-1621799 beschrieben.

Die Schutzschichten B und B' bestehen bevorzugt aus einem Epoxid- oder Polyurethanharz und weisen eine Dicke im Bereich von 10 bis 500 µm, bevorzugt im Bereich von 20 bis 100 µm auf.

Als Substratschicht C kommen anorganische oder organische Baumaterialien wie Holz, mittel- oder hochdichte Faserplatten, Gips- oder Calciumsilikatplatten, Papier, Metall oder Kunststoff in Betracht.

Die Dicke der Substratschicht C kann in weiten Bereichen variieren und hängt im wesentlichen von dem eingesetzten Baumaterial und Verwendungszweck ab. Üblicherweise liegt die Dicke der Substratschicht C im Bereich von 0,1 bis 500 mm, bevorzugt im Bereich von 1 bis 100 mm.

Die erfindungsgemäße Verbundschichtplatte weist somit die Schichtfolge B'-A-B-C auf. Sie kann jedoch auch mehrere Substratschichten C enthalten. In diesem Falle wirken sowohl die Schutzschicht B als auch die Schutzschicht B' als Haftschichten zwischen der Brandschutzschicht A und den Substratschichten C. Bevorzugte Schichtabfolgen sind GB'-A-B-C oder GB'-A-B-GB-A-B'-C.

Die erfindungsgemäßen Verbundschichtplatten können hergestellt werden, indem auf die Brandschutzschicht A eine Epoxid/Härtermischung oder ein Polyurethanklebstoff aufgebracht wird und die Substratschicht C vor dem Aushärten der Schutzschicht B aufgelegt wird. Die Härtung kann in einer Presse, beispielsweise in einer Fumierpresse bei einem Pressdruck im Bereich von 0,1 bis 10 bar, bevorzugt im Bereich von 2 bis 5 bar durchgeführt werden. Die weitere Schutzschicht B' kann zuvor oder nach Herstellen des Verbundes und Wenden auf der gegenüberliegenden Seite der Brandschutzschicht A aufgetragen und gehärtet werden.

Dieses Verfahren kann zur Bildung weiterer Schichten beliebig wiederholt werden. Bevorzugt werden die Brandschutzschichten A mit einer Epoxid/Härter-mischung oder einem Polyurethanklebstoff beschichtet und zusammen mit mehreren Substratschichten C in der gewünschten Schichtfolge gestapelt. Bevorzugt wird die Härtung anschließend durch Pressen des gesamten Verbundes in der Presse durchgeführt. Da die noch unbeschichtete Brandschutzschicht A flexibler ist, erreicht man auf diese Weise eine bessere Verpressung und geringere Dickenschwankungen. Die Temperatur während der Härtung hängt im Wesentlichen von der Art und Zusammensetzung der Epoxid/Härtermischung oder des Polyurethanklebstoffs ab und liegt in der Regel im Bereich von 20 bis 100°C. Bei höheren Temperaturen muss die Presszeit entsprechend kürzer gewählt werden, um ein Aufschäumen der Brandschutzschichten A zu verhindem.

Die erfindungsgemäßen Verfahren und Verbundschichtplatten lassen sich in Handwerksbetrieben einfach durch übliche Verarbeitungsmaschinen durch Sägen, Schneiden oder Stanzen ausüben bzw. verarbeiten. Insbesondere eignen sich Verbundschichtplatten mit einer Substratschicht C aus mittel- oder hochdichten Faserplatten als Kernmaterial für Brandschutztüren.

### Beispiele

### Beispiel 1

Analog Beispiel 1 aus DE-A-1621799 wurde auf eine 1,2 mm dicke Platte aus glasfaserverstärktem Natriumsilikat das dort beschriebene Epoxid/Härtergemisch mit einem Flächengewicht von 90 g/m² einseitig aufgetragen. Anschließend wurde eine 1 mm dicke mitteldichte Faserplatte aufgelegt und in einer Fumierpresse bei 80°C und einem Pressdruck von 4 kg/cm² 10 Minuten lang gehärtet.

### Beispiel 2

Analog Beispiel 1 wurde auf eine 1,2 mm dicke Platte aus glasfaserverstärktem Natriumsilikat beidseitig ein Epoxid/Härtergemisch mit einem Flächengewicht von 90 g/m² aufgetragen und jeweils eine 1 mm dicke mitteldichte Faserplatte aufgelegt. Der so erhaltene Verbund wurde wie in Beispiel 1 in einer Fumierpresse zu einem Verbund der Schichtabfolge C-B'-A-B-C gehärtet.

## Patentansprüche

1. Verfahren zur Herstellung einer Verbundschichtplatte, **dadurch gekennzeichnet, dass** auf eine Brandschutzschicht A mit einer intumeszierenden Masse auf Basis eines Alkalimetallsilikates eine Epoxidharz/Härtermischung oder ein Polyurethanklebstoff zur Bildung einer Schutzschicht B und eine Substratschicht C aus Holz, Faserplatten, Papier, Metall oder Kunststoff vor dem Aushärten der Schutzschicht B aufgebracht wird und die Härtung in einer Presse durchgeführt wird.

2. Verfahren nach Anspruch 1, **dadurch gekennzeichnet, dass** die Härtung bei einem Pressdruck im Bereich von 0,1 bis 10 bar durchgeführt wird.

3. Verfahren nach Anspruch 1 oder 2, **dadurch gekennzeichnet, dass** auf die Brandschutzschicht A vor oder nach dem Aufbringen der Schutzschicht B und der Substratschicht C eine weitere Schutzschicht B' aufgetragen und gehärtet wird.

4. Verbundschichtplatte, enthaltend mindestens
a) eine Brandschutzschicht A mit einer intumeszierenden Masse auf Basis eines Alkalimetallsilikats und beidseitig aufgebrachten
b) Schutzschichten B und B', welche aus einem Epoxid- oder Polyurethanharz bestehen und als Haftschichten zwischen der Brandschutzschicht A und der Substratschicht C wirken, und
c) einer Substratschicht C aus anorganischen oder organischen Baumaterialien, Papier, Metall, Kunststoff,
und wobei die Verbundschichtplatte die Schichtfolge B'-A-B-C aufweist, erhältlich nach dem Verfahren gemäß Anspruch 3.

5. Verbundschichtplatte nach Anspruch 4, **dadurch gekennzeichnet, dass** die Brandschutzschicht A aus einem faserverstärkten, wasserhaltigen Natriumsilikat besteht.

6. Verbundschichtplatte nach einem der Anspruch 4 oder 5, **dadurch gekennzeichnet, dass** die Substratschicht C als anorganische oder organische Baumaterialien Holz, mittel- oder hochdichte Faserplatten, Gips oder Calciumsilikat enthält.

7. Verbundschichtplatte nach einem der Ansprüche 4 bis 6, **dadurch gekennzeichnet, dass** die Brandschutzschicht A eine Dicke im Bereich von 1 bis 5 mm, die Schutzschichten B und B' jeweils eine Dicke im Bereich von 10 bis 500 µm und die Substratschicht C eine Dicke im Bereich von 0,1 bis 100 mm aufweisen.

8. Verbundschichtplatte nach einem der Ansprüche 4 bis 7, **dadurch gekennzeichnet, dass** sie aus der Schichtfolge C-B'-A-B-C besteht.

9. Brandschutztür, enthaltend eine Verbundschichtplatte nach einem der Ansprüche 4 bis 8.

## Claims

1. A process for production of a composite layered sheet, which comprises applying an epoxy resin/hardener mixture or a polyurethane adhesive to a fire-protection layer A with an intumescent composition based on an alkali metal silicate, to form a protective layer B, and, prior to full curing of the protective layer B, applying a substrate layer C composed of wood, fiberboard, paper, metal, or plastic, and carrying out the curing in a press.

2. The process according to claim 1, wherein the pressure in the press during curing is in the range from 0.1 to 10 bar.

3. The process according to claim 1 or 2, wherein, prior to or after application of the protective layer B and of the substrate layer C, another protective layer B' is applied to the fire-protection layer A and cured.

4. A composite layered sheet, comprising at least
a) a fire-protection layer A with an intumescent composition based on an alkali metal silicate and, applied on the two sides,
b) protective layers B and B', which are composed of an epoxy resin or polyurethane resin and act as tie layers between the fire-protection layer A and the substrate layer C, and
c) a substrate layer C composed of inorganic or organic construction materials, paper, metal, plastic,
the composite layered sheet having the layer sequence B'-A-B-C, obtainable by the process according to claim 3.

5. The composite layered sheet according to claim 4, wherein the fire-protection layer A is composed of a fiber-reinforced, hydrous sodium silicate.

6. The composite layered sheet according to either of claims 4 and 5, wherein the substrate layer C comprises, as inorganic or organic construction materials, wood, medium- or high-density fiberboard, gypsum plaster, or calcium silicate.

7. The composite layered sheet according to any of claims 4 to 6, wherein the thickness of the fire-protection layer A is from 1 to 5 mm, the thickness of each of the protective layers B and B' is in the range from 10 to 500 µm, and the thickness of the substrate layer C is in the range from 0.1 to 100 mm.

8. The composite layered sheet according to any of claims 4 to 7, which is composed of the layer sequence C-B'-A-B-C.

9. A fire-protection door, comprising a composite layered sheet according to any of claims 4 to 8.

## Revendications

1. Procédé de fabrication d'une plaque composite, **caractérisé en ce que**, sur une couche coupe-feu A comprenant une masse intumescente à base d'un silicate de métal alcalin, un mélange résine époxyde/agent de durcissement ou un adhésif polyuréthane est appliqué pour la formation d'une couche de protection B et d'une couche de substrat C en bois, plaques de fibres, papier, métal ou plastique, avant le durcissement de la couche de protection B, et le durcissement est réalisé dans une presse.

2. Procédé selon la revendication 1, **caractérisé en ce que** le durcissement est réalisé à une pression de compression dans la plage allant de 0,1 à 10 bar.

3. Procédé selon la revendication 1 ou 2, **caractérisé en ce qu'**une couche de protection B' supplémentaire est appliquée sur la couche coupe-feu A avant ou après l'application de la couche de protection B et de la couche de substrat C, et durcie.

4. Plaque composite, contenant au moins
a) une couche coupe-feu A comprenant une masse intumescente à base d'un silicate de métal alcalin et, appliquées des deux côtés,
b) des couches de protection B et B', qui sont constituées d'une résine époxyde ou polyuréthane et qui agissent en tant que couches d'adhésion entre la couche coupe-feu A et la couche de substrat C, et
c) une couche de substrat C en matériaux de construction inorganiques ou organiques, papier, métal, plastique,
et la plaque à couche composite présentant la séquence de couches B'-A-B-C, pouvant être obtenue par le procédé selon la revendication 3.

5. Plaque composite selon la revendication 4, **caractérisée en ce que** la couche coupe-feu A est constituée d'un silicate de sodium contenant de l'eau, renforcé par des fibres.

6. Plaque composite selon l'une quelconque des revendications 4 ou 5, **caractérisée en ce que** la couche de substrat C contient du bois, des plaques de fibres moyenne ou haute densité, du gypse ou du silicate de calcium en tant que matériaux de construction inorganiques ou organiques.

7. Plaque composite selon l'une quelconque des revendications 4 à 6, **caractérisée en ce que** la couche coupe-feu A présente une épaisseur dans la plage allant de 1 à 5 mm, les couches de protection B et B' présentent chacune une épaisseur dans la plage allant de 10 à 500 µm et la couche de substrat C présente une épaisseur dans la plage allant de 0,1 à 100 mm.

8. Plaque composite selon l'une quelconque des revendications 4 à 7, **caractérisée en ce qu'**elle est constituée de la séquence de couches C-B'-A-B-C.

9. Porte coupe-feu, contenant une plaque composite selon l'une quelconque des revendications 4 à 8.
